# EUROPEAN PATENT APPLICATION

(11) **EP 2 348 744 A2**
(43) Date of publication of application: **27.07.2011**
(21) Application number: 10174643.6
(22) Date of filing: 31.08.2010
(51) Int. Cl.: H04N 13/00

(54) **Display device and method of driving the same, and shutter glasses and method of driving the same**

(30) Priority: 25.01.2010 KR 20100006493
(71) Applicant: SAMSUNG ELECTRONICS CO., LTD., Suwon-si Gyeonggi-do 442-742 (KR)
(72) Inventor: Yoon, Hyun-jin, Seoul (KR); Hwang, Tae-don, Suwon-si (KR)
(74) Representative: Waddington, Richard

(57) **Abstract**

Disclosed is a display device using three-dimensional (3D) shutter glasses including a left shutter and a right shutter, the display device including: a signal receiving unit which receives an image signal including a left image and a right image; a signal processing unit which processes the image signal received by the signal receiving unit; a display unit which displays a 3D image according to the processed image signal; a synchronization signal receiving unit which receives a synchronization signal for the left and right images from the 3D glasses; and a controller which controls the signal processing unit to alternately display the left and right images according to the synchronization signal corresponding to opening and closing of the left shutter and the right shutter.

## Description

### BACKGROUND

### 1. Field

Apparatuses and methods consistent with exemplary embodiments relate to a display device and a method of driving the same, and shutter glasses and a method of driving the same, and more particularly, to a display device which provides clear images and a method of driving the same, and shutter glasses and a method of driving the same.

### 2. Description of the Related Art

A three-dimensional (3D) image displayed by a display device such as a TV has a stereoscopic effect by using a binocular parallax, which is a major factor to allow three-dimensional recognition at a short distance.

The 3D image may be viewed with 3D shutter glasses and realized by a display device quickly and alternately displaying a left image and a right image and opening and closing the 3D shutter glasses to synchronize the displayed left images with the displayed right images. That is, when the left images of the display device are displayed on a screen, a left shutter of the 3D glasses is opened and a right shutter is closed. When the right images of the display device are displayed, the right shutter of the 3D shutter glasses is opened and the left shutter is closed.

In order to perform these operations, the display device outputs a synchronization signal to the 3D shutter glasses. However, in the case of watching 3D images displayed on a plurality of display devices with a single pair of 3D shutter glasses, clear images may not be easily obtained since the display devices output different synchronization signals.

### SUMMARY

Accordingly, one or more exemplary embodiments provide a display device which enables a user to watch clear 3D images displayed on a plurality of display devices with a single pair of 3D glasses and a method of driving the same, and shutter glasses and a method of driving the same.

According to the present invention there is provided an apparatus and method as set forth in the appended claims. Other features of the invention will be apparent from the dependent claims, and the description which follows.

According to an aspect of an exemplary embodiment, there is provided a display device using 3D shutter glasses including a left shutter and a right shutter, the display device including: a signal receiving unit which receives an image signal including a left image and a right image; a signal processing unit which processes the image signal received by the signal receiving unit; a display unit which displays a 3D image on the basis of the image signal processed by the signal processing unit; a synchronization signal receiving unit which receives a synchronization signal for the left and right images from the three-dimensional glasses; and a controller which controls the signal processing unit to alternately display the left and right images on the basis of the synchronization signal corresponding t o opening and closing of the left shutter and the right shutter.

The synchronization signal receiving unit may receive the synchronization signal as a radio frequency (RF) signal.

The synchronization signal receiving unit may receive the synchronization signal as an infrared (IR) signal.

According to an aspect of another exemplary embodiment, there is provided 3D shutter glasses to view a left image and a right image which are alternately displayed on a display device, the 3D shutter glasses including: a shutter which includes a left shutter and a right shutter which are alternately opened and closed; a synchronization signal generating unit which generates a synchronization signal to alternately display the left and right images corresponding to opening and closing of the left shutter and the right shutter; and a signal transmitting unit which transmits the synchronization signal generated by the synchronization signal generating unit to the display device.

According to an aspect of another exemplary embodiment, there is provided a method of driving a display device which uses 3D shutter glasses including a left shutter and a right shutter, the display device including: processing an image signal including left and right images which are alternated and input; receiving a synchronization signal for the left and right images from the 3D glasses; and alternately displaying the left and right images on the basis of the synchronization signal corresponding to opening and closing of the left shutter and the right shutter.

The receiving ma y include receiving the synchronization signal as an RF signal.

The receiving ma y include receiving the synchronization signal as an IR signal.

According to an aspect of another exemplary embodiment, there is provided a method of driving 3D shutter glasses to view a left image and a right image which are alternately displayed on a display device, the method including: alternately opening and closing a left shutter and a right shutter; generating a synchronization signal to alternately display the left and right images corresponding to opening and closing of the left shutter and the right shutter; a n d transmitting the synchronization signal to the display device.

According to an aspect of another exemplary embodiment, there is provided a display device communicating with 3D shutter glasses including: a signal receiving unit which receives an image signal including a left image and a right image; a signal processing unit which processes the image signal received by the signal receiving unit; a display unit which displays a 3D image on the basis of the image signal processed by the signal processing unit; a synchronization signal receiving unit which receives a synchronization signal corresponding to shuttering from the 3D glasses; and a controller which controls the signal processing unit to generate a vertical synchronization signal (Vsync) on the basis of synchronization signal and display the 3D image on the basis of the vertical synchronization signal.

The controller may alternately display the left and right images processed by the signal processing unit to display the three-dimensional image.

According to an aspect of another exemplary embodiment, there is provided 3D shutter glasses to view a left image and a right image which are alternately displayed on a plurality of display devices, the 3D shutter glasses including: a shutter which includes a left shutter and a right shutter which are alternately opened and closed; a synchronization signal generating unit which generates a synchronization signal corresponding to shuttering; and a signal transmitting unit which transmits the synchronization signal to the plurality of display devices.

The synchronization signal may be toggled whenever the left shutter is opened.

The synchronization signal may be toggled whenever the right shutter is opened.

The synchronization signal may be toggled whenever the left shutter and the right shutter are opened.

According to an aspect of another exemplary embodiment, there is provided a display system including: 3D shutter glasses which generates a synchronization signal corresponding to shuttering and transmits the synchronization signal to a plurality of display devices; and the plurality of display devices which each receive the synchronization signal, generate a Vertical synchronization signal (Vsync) on the basis of the received synchronization signal, and display a three-dimensional image on the basis of the vertical synchronization signal.

The plurality of display devices may each alternately display a left image and a right image to display the 3D image.

The synchronization signal may be toggled whenever the left shutter is opened.

The synchronization signal may be toggled whenever the right shutter is opened.

The synchronization signal may be toggled whenever the left shutter and the right shutter are opened.

According to an aspect of another exemplary embodiment, there is provided an image processing device using 3D shutter glasses including a left shutter and a right shutter, the display device including: a signal receiving unit which receives an image signal comprising a left image and a right image; a signal processing unit which processes th e received image signal; a synchronization signal receiving unit which receives, from the 3D shutter glasses, a synchronization signal for the left image and the right image; and a controller which controls the signal processing unit to alternately output for display the left image and the right image according to the received synchronization signal corresponding to opening and closing of the left shutter and the right shutter.

### BRIEF DESCRIPTION OF THE DRAWINGS

The above and/or other aspects will become apparent and mo r e readily appreciated from th e following description of the exemplary embodiments, taken in conjunction with the accompanying drawings, in which:
FIG. 1 illustrates a configuration of a display device according to an exemplary embodiment;
FIG. 2 illustrates a configuration of 3D shutter glasses according to an exemplary embodiment;
FIG. 3 is a flow chart illustrating an operation of a display device according to an exemplary embodiment; and
FIG. 4 is a flow chart illustrating an operation of 3D shutter glasses according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. Expressions such as "at least one of," when preceding a list of elements, modify the entire list of elements and do not modify the individual elements of the list.

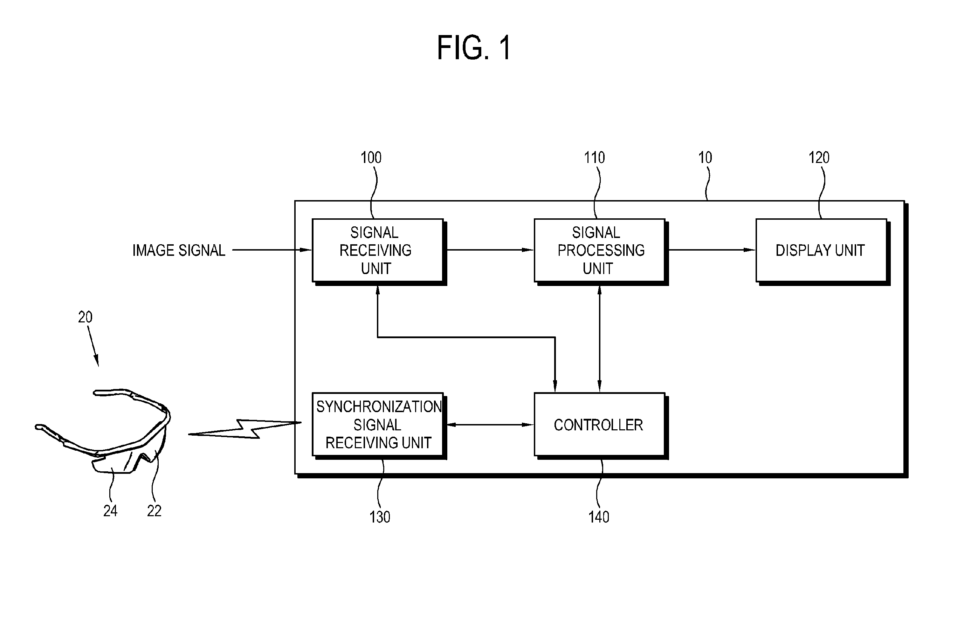

FIG. 1 illustrates a configuration of a display device 10 according to an exemplary embodiment. Referring to FIG. 1, the display device 10 includes a signal receiving unit 100, a signal processing unit 110, a display unit 120, a synchronization signal receiving unit 130, and a controller 140.

The signal receiving unit 100 receives an image signal including a left image and a right image. The received image signal may include a left image and a right image which are alternated. Further, the received image signal may be a broadcasting signal such as a digital television (DTV) signal, a cable broadcasting signal, etc. In this case, the signal receiving unit 100 may receive a broadcasting signal of a channel selected by a user via tuning according to a control by the controller 140. Moreover, the image signal received by the signal receiving unit 100 may be a signal output from a video device such as a digital video disc (DVD), a blu-ray disc (BD), etc. In addition, although not shown, the signal receiving unit 100 may additionally receive at least one of an audio signal for audio output, a data signal for output of data information, etc. In the present exemplary embodiment, an image signal, an audio signal, and a data signal may be received together through a single broadcasting signal.

The signal processing unit 110 processes the received image signal so that left and right images may be displayed as 3D images on the display unit 120. Signal processing conducted by the signal processing unit 110 may include at least one of decoding, image enhancing, scaling, etc. Furthermore, the signal processing unit 110 may perform demultiplexing, which is sorting signals received through the signal receiving unit 100 into image, audio, and data signals, decoding audio and data signals, etc. In this case, the display device 10 may further include an audio output unit (not shown) which outputs a sound based on an audio signal processed by the signal processing unit 110 via, for example, a speaker.

The display unit 120 displays an image on the basis of the image signal processed by the signal processing unit 110. The display unit 120 may be, for example, a liquid crystal display, an organic light emitting diode display (OLED), etc. In this case, although not shown, the display unit 120 may include an LCD panel, a panel driver, a backlight, etc. A backlight may include a light source, e.g., an LED. Furthermore, the display unit 120 may display data information included in a data signal processed by the signal processing unit 110.

The synchronization signal receiving unit 130 receives synchronization signals for left and right images from 3D glasses 20. A synchronization signal is a signal generated according to opening/closing of a left shutter 22 and a right shutter 24 of the 3D glasses 20 and may be received as a radio frequency (RF) signal or an infrared (IR) signal. A received synchronization signal is transmitted to the controller 140.

The controller 140 controls other components of the display device 10, such as the signal processing unit 110 or the like. Furthermore, when the synchronization signal receiving unit 130 receives a synchronization signal, the controller 140 controls the signal processing unit 110 to display a 3D image on the basis of th e received synchronization signal.

For example, if a synchronization signal is generated in a high state when the left shutter 22 of the 3D glasses 20 is opened and the right shutter 24 is closed, the controller 140 controls left images to be displayed when the synchronization signal in the high state is generated. Subsequently, when the left shutter 22 is closed and the right shutter 24 is opened, the controller 140 allows right images to be displayed.

Meanwhile, if a synchronization signal is generated in a high state when the left shutter 22 of the 3D glasses 20 is closed and the right shutter 24 is opened, the controller 140 controls right images to be displayed when the synchronization signal in the high state is generated. Next, when the right shutter 24 is closed and the left shutter 22 is opened, the controller 140 controls left images to be displayed. It is understood that this method is an exemplary method to display a left image and a right image corresponding to opening/closing of the left shutter 22 and the right shutter 24 of the 3D glasses 20 , and displaying left an d right images according to opening/closing of the left shutter 22 and the right shutter 24 of the 3D glasses 20 may be realized by various other methods according to other exemplary embodiments. For example, according to another exemplary embodiment, the controller 140 generates a vertical synchronization signal (Vsync) on the basis of a received synchronization signal and displays a 3D image according to the vertical synchronization signal.

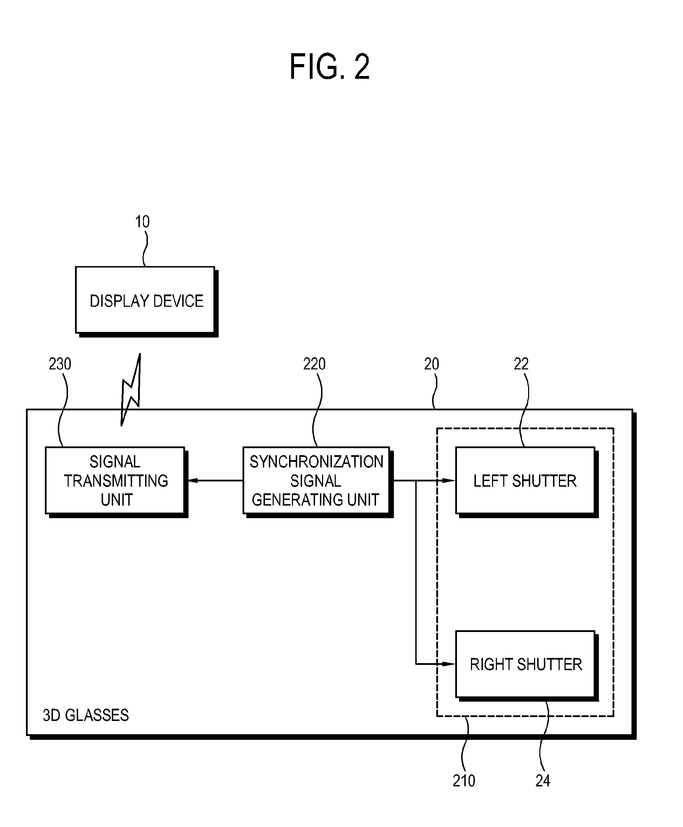

FIG. 2 illustrates a configuration of 3D shutter glasses 20 according to an exemplary embodiment. Referring to FIG. 2, the 3D shutter glasses 20 include a shutter 210, a synchronization signal generating unit 220, and a signal transmitting unit 230.

The shutter 210 includes the left shutter 22 and the right shutter 24, which are alternately opened and closed.

The synchronization signal generating unit 220 may generate a synchronization signal according to opening/closing of the left shutter 22 and the right shutter 24, i.e., a time when the left shutter 22 and the right shutter 24 are opened and closed. The generated synchronization signal is transmitted to the display device 10, and the display device 10 alternately displays left and right images on the basis of the synchronization signal corresponding to opening/closing of the left shutter 22 and the right shutter 24.

Meanwhile, the synchronization signal generating unit 220 generates a synchronization signal having a preset cycle and transmits the synchronization signal to the shutter 210 and the display device. Here, the left shutter 22 and the right shutter 24 are opened and closed according to the synchronization signal transmitted from the synchronization signal generating unit 220, and left and right images are alternately displayed according to the synchronization signal. Fo r example, the synchronization signal may be toggled whenever the left shutter 22 or the right shutter 24 is on.

The signal transmitting unit 230 transmits the synchronization signal generated by the synchronization signal generating unit 220 to the display device 10. If a plurality of display devices 10 are provided, the signal transmitting unit 230 transmits a synchronization signal to each of the display devices 10. A synchronization signal may be transmitted as an RF signal, an IR signal, a Bluetooth signal, etc.

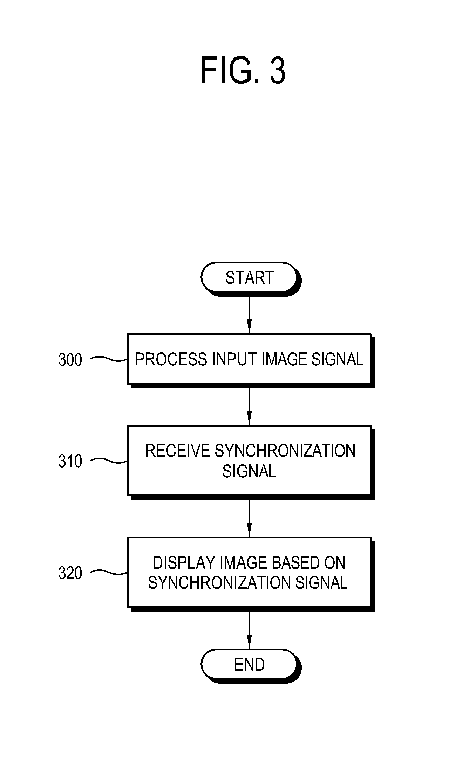

FIG. 3 is a flow chart illustrating an operation of a display device 10 according to an exemplary embodiment. Referring to FIG. 3, the signal processing unit 110 processes an image signal including a left image and a right image which are alternated and input to a signal receiving unit 100 to be displayed on a display unit 120 (300). A synchronization signal receiving unit 130 receives a synchronization signal transmitted from 3D glasses 20 (310), and the synchronization signal is transmitted to a controller 140. The controller 140 controls the signal processing unit 110 to alternately display left and right images on the basis of the synchronization signal corresponding to opening/closing of a left shutter 22 and a right shutter 24 (320).

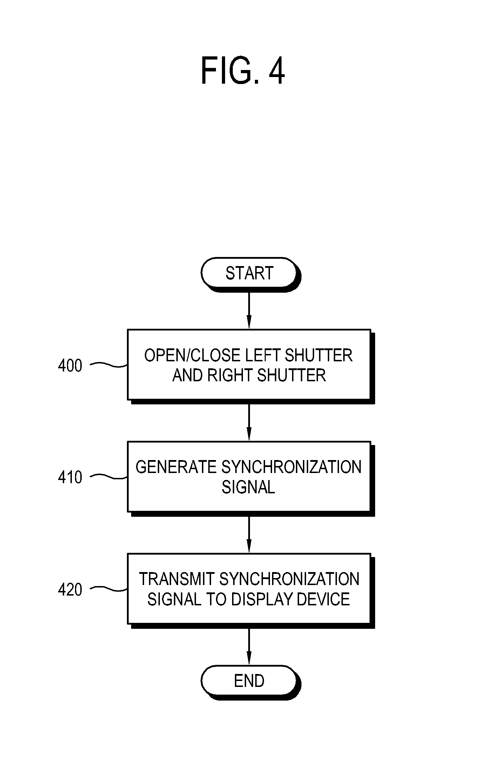

FIG. 4 is a flow chart illustrating an operation of 3 D shutter glasses 20 according to an exemplary embodiment. Referring to FIG. 4, a synchronization signal generating unit 220 generates a synchronization signal on the basis of opening/closing of a left shutter 22 and a right shutter 24 such that left and right images are alternately displayed on a display device 10 corresponding to opening/closing of the left shutter 22 and the right shutter 24 (410). Then, a signal transmitting unit 230 transmits the generated synchronization signal to the display device 10 (420).

A s described above, according to exemplary embodiments, a synchronization signal is generated in 3D glasses and transmitted to a display device, thereby providing clear images when a user watches 3D images displayed on a plurality of display devices with a single pair of 3D glasses.

While not restricted thereto, exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, exemplary embodiments ma y be written a s computer programs transmitted over a computer-readable transmission medium, such as a carrier wave, and received and implemented in general-use or special-purpose digital computers that execute the programs. Moreover, while not required in all aspects, one or more of the above-described units can include a processor or microprocessor executing a computer program stored in a computer-readable medium.

Although a few exemplary embodiments have been shown and described, it will be appreciated by those skilled in the art that changes may be made in these exemplary embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including an y accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in th i s specification (including any accompanying claims, abstract and drawings), or to any novel one, or any novel combination, of the steps of any method or process so disclosed.

## Claims

1. A display device using three-dimensional shutter glasses with a left shutter and a right shutter, the display device comprising:
a signal receiving unit which receives an image signal including left and right images;
a signal processing unit which processes the image signal received by the signal receiving unit;
a display unit which displays a three-dimensional image on the basis of the image signal processed by the signal processing unit;
a synchronization signal receiving unit which receives a synchronization signal for the left and right images from the three-dimensional glasses; and
a controller which controls the signal processing unit to alternately display the left and right images on the basis of the synchronization signal corresponding to opening and closing of the left shutter and the right shutter.

2. The display device according to claim 1, wherein the synchronization signal receiving unit receives the synchronization signal as an RF signal.

3. The display device according to claim 1, wherein the synchronization signal receiving unit receives the synchronization signal as an IR signal.

4. Three-dimensional shutter glasses to display left and right images which are alternately displayed in a display device to a user, the three-dimensional shutter glasses comprising:
a shutter which includes a left shutter and a right shutter which are alternately opened and closed;
a synchronization signal generating unit which generates a synchronization signal to alternately display the left and right images corresponding to opening and closing of the left shutter and the right shutter; and
a signal transmitting unit which transmits the synchronization signal generated by the synchronization signal generating unit to the display device.

5. A method of driving a display device which uses three-dimensional shutter glasses with a left shutter and a right shutter, the method comprising:
processing an image signal including left and right images which are alternated and input;
receiving a synchronization signal for the left and right images from the three-dimensional glasses; and
alternately displaying the left and right images on the basis of the synchronization signal corresponding to opening and closing of the left shutter and the right shutter.

6. The method according to claim 5, wherein the receiving comprises receiving the synchronization signal as an RF signal.

7. The method according to claim 5, wherein the receiving comprises receiving the synchronization signal as an IR signal.

8. A method of driving three-dimensional shutter glasses to display left and right images which are alternately displayed in a display device to a user, the method comprising:
alternately opening and closing a left shutter and a right shutter which are;
generating a synchronization signal to alternately display the left and right images corresponding to opening and closing of the left shutter and the right shutter; and
transmitting the synchronization signal to the display device.

9. A display device communicating with three-dimensional shutter glasses, the display device comprising:
a signal receiving unit which receives an image signal including left and right images;
a signal processing unit which processes the image signal received by the signal receiving unit;
a display unit which displays a three-dimensional image on the basis of the image signal processed by the signal processing unit;
a synchronization signal receiving unit which receives a synchronization signal corresponding to shuttering from the three-dimensional glasses; and
a controller which controls the signal processing unit to generate a vertical synchronization signal (Vsync) on the basis of synchronization signal and display the three-dimensional image on the basis of the vertical synchronization signal.

10. The display device according to claim 9, wherein the controller alternately displays the left and right images processed by the signal processing unit to display the three-dimensional image.

11. Three-dimensional shutter glasses to display left and right images which are alternately displayed in a plurality of display devices to a user, the three-dimensional shutter glasses comprising:
a shutter which includes a left shutter and a right shutter which are alternately opened and closed;
a synchronization signal generating unit which generates a synchronization signal corresponding to shuttering; and
a signal transmitting unit which transmits the synchronization signal to the plurality of display devices.

12. The three-dimensional shutter glasses according to claim 11, wherein the synchronization signal is toggled whenever the left shutter is on.

13. The three-dimensional shutter glasses according to claim 11, wherein the synchronization signal is toggled whenever the right shutter is on.

14. The three-dimensional shutter glasses according to claim 11, wherein the synchronization signal is toggled whenever the left shutter and the right shutter are on.
